# FASCICULE DE BREVET EUROPEEN

(11) **EP 3 383 665 B1**
(45) Date de publication et mention de la délivrance du brevet: **18.03.2020**
(21) Numéro de dépôt: 16819349.8
(22) Date de dépôt: 02.12.2016
(51) Int. Cl.: B60C 1/00, C08K 3/04, C08K 5/098

(54) **RETICULATION DE COMPOSITION A BASE DE NEOPRENE COMME ELASTOMERE MAJORITAIRE PAR DES DERIVES D'ACRYLATE**
VERNETZUNG VON ZUSAMMENSETZUNGEN AUS NEOPREN ALS DAS PRÄDOMINANTE ELASTOMER DURCH ACRYLATDERIVATE
CROSSLINKING OF COMPOSITIONS MADE FROM NEOPRENE AS THE PREDOMINANT ELASTOMER BY ACRYLATE DERIVATIVES

(30) Priorité: 03.12.2015 FR 1561807
(43) Date de publication de la demande: 10.10.2018
(73) Titulaire: Compagnie Générale des Etablissements Michelin, 63000 Clermont-Ferrand (FR)
(72) Inventeur: MAESAKA, Masayuki, 63040 Clermont-Ferrand Cedex 9 (FR); TRIGUEL, Aurélie, 63040 Clermont-Ferrand Cedex 9 (FR)
(74) Mandataire: Wroblewski, Nicolas Paul André
(86) Numéro de dépôt international: PCT/FR2016/053182
(87) Numéro de publication internationale: WO 2017/093687

(56) Documents cités:
- EP-A1- 2 088 169
- CN-A- 103 509 216
- CN-A- 104 177 806

## Description

### Domaine technique

La présente invention est relative à des systèmes de réticulation pour des compositions comprenant du néoprène comme élastomère majoritaire, et aux pneumatiques fabriqués à partir de ces compositions.

### Etat de la technique

La réticulation de matrice élastomérique est une étape indispensable à la fabrication des pneumatiques. Elle permet de faire passer la matrice élastomérique d'un état plastique à un état élastique.

La réticulation des matrices élastomériques classiquement utilisées en caoutchouterie est généralement réalisée à l'aide d'un agent réticulant à base de soufre ou d'un agent donneur de soufre. Ces agents réticulant sont très souvent utilisés en association avec des agents accélérateurs de réticulation, tels que des accélérateurs du type thiazoles ainsi que leurs dérivés, ou de types sulfénamides, thiurames, dithiocarbamates, dithiophosphates, thiourées et xanthates.

Dans le cas du néoprène, les systèmes habituellement utilisés pour sa réticulation sont des systèmes à base d'oxyde métalliques, tels que ZnO et MgO, généralement utilisés en coupage (A Guide to Grandes, Compounding and Processing of Neoprene Rubber, Technical Information, Rev. 3, 2004).

Le choix du système de réticulation est notamment déterminé par la nature de la matrice élastomérique que l'on souhaite réticuler et les propriétés que l'on souhaite conférer au mélange.

Par ailleurs, et en particulier dans le domaine du pneumatique, il est toujours nécessaire d'améliorer les propriétés des mélanges, en particulier l'allongement rupture et la cohésion du mélange afin d'améliorer la durée de vie des pneumatiques et leurs propriétés, notamment leur propriétés en endurance sous forte contrainte et/ou forte déformation.

### Exposé de l'invention

Suite à leurs recherches, les Demanderesses ont développé des systèmes de réticulation pour des compositions à base de néoprène comme élastomère majoritaire. Ces systèmes de réticulation permettent d'améliorer significativement les propriétés limites et la cohésion des mélanges.

En conséquence, l'invention a notamment pour objet un pneumatique (ci-après dénommé « pneumatique selon l'invention » ou « pneumatique selon la présente invention ») comprenant au moins une composition à base de néoprène comme élastomère majoritaire, d'une charge renforçante et d'un système de réticulation étant exempt de peroxyde ou en contenant moins de 0,1 parties en poids pour cent parties en poids d'élastomère, pce, le système de réticulation comprenant un dérivé d'acrylate de formule (I)

**[X]p A** (I)

dans laquelle,
- [X]p correspond à la formule (II) 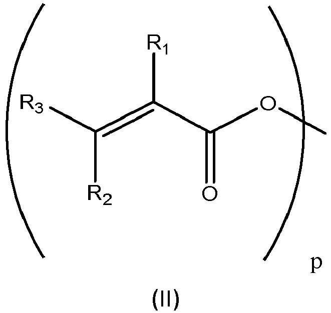 dans laquelle,
   R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R2 et R3 pouvant former ensemble un cycle non aromatique,
- A représente un atome appartenant au groupe constitué par les métaux alcalino-terreux ou les métaux de transition, un atome de carbone ou un groupement hydrocarboné en C₁-C₈, A comprenant p valences libres, p ayant une valeur allant de 2 à 4,
- étant entendu que les 2 à 4 radicaux X sont identiques ou différents.

La présente invention concerne également une composition de caoutchouc (ci-après dénommée « composition selon l'invention » ou « composition selon la présente invention ») à base de néoprène comme élastomère majoritaire, d'une charge renforçante et d'un système de réticulation exempt de peroxyde, ou en contenant moins de 0,1 parties en poids pour cent parties en poids d'élastomère, pce, et (i) exempt d'oxyde de zinc ou en contenant moins de 4 pce, et/ou (ii) exempt d'oxyde de magnésium ou en contenant moins de 5 pce, le système de réticulation comprenant un dérivé d'acrylate de formule (I).

Ces compositions sont utilisables notamment dans le domaine des pneumatiques, mais également dans les domaines des combinaisons de sport aquatique, tapis convoyeurs, patins de freins, essuie-glaces, supports moteur, amortisseurs dans la construction, isolants pour câble, produits cellulaires, courroies, profilés, joints et chaussures

### Définitions

Par l'expression "partie en poids pour cent parties en poids d'élastomère" (ou pce), il faut entendre au sens de la présente invention, la partie, en masse pour cent parties en masse d'élastomère ou de caoutchouc.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation. A titre d'exemple, une composition à base d'une matrice élastomérique et de soufre comprend la matrice élastomérique et le soufre avant cuisson, alors qu'après cuisson le soufre n'est plus détectable car ce dernier a réagi avec la matrice élastomérique en formant des ponts disulfure.

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition. Au contraire, un composé « minoritaire » est un composé qui ne représente pas la fraction massique la plus grande parmi les composés du même type.

Dans la présente, lorsque l'expression « la composition » ou « ladite composition » est utilisée, cette expression concerne aussi bien la composition du pneumatique selon l'invention que la composition selon l'invention.

### Matrice élastomérique

Selon l'invention, le néoprène est l'élastomère majoritaire de la composition du pneumatique selon l'invention et/ou de la composition selon l'invention.

Conviennent comme néoprènes, tout polymère fabriqué à partir du monomère chloroprène utilisé seul ou en association avec un ou plusieurs autres monomères différents du chloroprène. Est appelé néoprène tout polymère comprenant au moins 70% en poids de monomères chloroprène, de préférence au moins 80%, de préférence encore au moins 90 % en poids de monomères chloroprène.

Selon l'invention, le néoprène peut être du polychloroprène, c'est-à-dire un polymère fabriqué uniquement à partir de chloroprène comme monomère. Autrement dit, selon l'invention, le néoprène peut comprendre 100% en poids de monomères chloroprène.

Le néoprène peut être également un copolymère fabriqué par partir de monomères chloroprène et de monomères différents du chloroprène choisis dans le groupe constitué par le dichlorobutadiène, de préférence le 2,3-dichloro-1,3-butadiene, le butadiène, l'isoprène, le styrène ou des composés soufrés tels que le soufre ou des mercaptans. Dans ce cas, le néoprène comprend de 70% à moins de 100%, de préférence de 80% à moins de 100%, de préférence encore de 90% à moins de 100%, en poids de monomères chloroprène.

Selon l'invention, conviennent particulièrement les néoprènes ayant une Tg (température de transition vitreuse mesurée selon la norme ASTM D3418) comprise entre -20°C et -60°C et plus particulièrement entre -30°C et -50°C, et/ou ceux ayant une viscosité de Mooney (ML) mesurée selon la norme ASTM D1646 de 1999 supérieur à 20 et plus particulièrement entre 30 et 80.

De préférence, le néoprène est choisi parmi les néoprènes fabriqués à partir de monomères de chloroprène et de soufre (néoprènes de type G) ou les néoprènes fabriqués à partir de monomères chloroprène et de 2,3-dichloro-1,3-butadiene (néoprènes de type W).

Avantageusement, lorsque le néoprène est fabriqué à partir de monomères chloroprène et de dichlorobutadiène, de préférence le 2,3-dichloro-1,3-butadiene, le néoprène comprend entre 85 et 95 % en poids de monomère chloroprène et entre 5 et 15 % en poids de monomère dichlorobutadiène, de préférence de 2,3-dichloro-1,3-butadiene, étant entendu que le total des monomères chloroprène et dichlorobutadiène représente de 95 à 100%, de préférence 100% en poids du néoprène.

Alternativement, et de manière avantageuse, lorsque le néoprène est fabriqué à partir de monomères chloroprène et de soufre, le néoprène comprend entre 95 et 99 % en poids de monomère chloroprène et entre 1 et 5 % en poids de monomère soufre, étant entendu que le total des monomères chloroprène et soufre représente de 95 à 100%, de préférence 100% en poids du néoprène.

A titre d'exemples non limitatifs, on trouve dans le commerce le néoprène de type W « WRT » de la société Dupont, ou le néoprène de type G « GRT » de la société Dupont.

Par exemple, l'autre élastomère diénique, différent du néoprène, et optionnel pour la présente invention, peut être un élastomère choisi parmi les polybutadiènes, les élastomères isopréniques, les copolymères de butadiène, les copolymères d'isoprène et les mélanges de ces élastomères.

Par élastomère "diénique", doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Ces élastomères diéniques sont bien connus de l'homme de l'art et peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On entend plus particulièrement par élastomère diénique susceptible d'être utilisé dans les compositions conformes à l'invention :
a) tout homopolymère d'un monomère diène conjugué, notamment tout homopolymère obtenu par polymérisation d'un monomère diène conjugué ayant de 4 à 12 atomes de carbone;
b) tout copolymère obtenu par copolymérisation d'un ou plusieurs diènes conjugués entre eux ou avec un ou plusieurs composés vinyle aromatique ayant de 8 à 20 atomes de carbone;
c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que l'autre élastomère diénique est de préférence un des élastomères diéniques essentiellement insaturés, en particulier du type (a) ou (b) ci-dessus. Dans le cas de copolymères du type (b), ceux-ci contiennent de 20 à 99% en poids d'unités diéniques et de 1 à 80% en poids d'unités vinylaromatique.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), notamment ceux ayant un taux (% molaire) de liaison cis-1,4 supérieur à 90%, les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR).

L'autre élastomère diénique copolymère de butadiène peut être un copolymère d'unités butadiéniques et d'unités styréniques, c'est-à-dire tout copolymère obtenu par copolymérisation d'un ou plusieurs butadiène(s) avec un ou plusieurs composés styréniques. A titre de composés styréniques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène. Le copolymère butadiénique et styrénique peut être, par exemple, du copolymère butadiène-styrène (SBR). Il peut s'agir par exemple d'un SBR préparé en émulsion ("ESBR") ou d'un SBR préparé en solution ("SSBR"). Conviennent particulièrement les copolymères de butadiène-styrène ayant une Tg (mesurée selon ASTM D3418) comprise entre 0°C et - 70°C.

L'autre élastomère diénique peut également être majoritairement, voire exclusivement, un polybutadiène. Conviennent les polybutadiènes et en particulier ceux ayant une teneur (% molaire) en unités -1,2 comprise entre 4% et 80% ou ceux ayant une teneur (% molaire) en cis-1,4 supérieure à 80%.

L'autre élastomère diénique peut être par exemple à blocs, statistiques, séquencés, microséquencés, et être préparés en dispersion ou en solution ; ils peuvent être couplés et/ou étoilés et/ou fonctionnalisés avec un agent de couplage et/ou d'étoilage et/ou de fonctionnalisation.

De préférence, lorsque l'autre élastomère diénique est présent, il est choisi dans le groupe constitué par les polybutadiènes, les polyisoprènes de synthèse, le caoutchouc naturel, les copolymères de butadiène, les copolymères d'isoprène et les mélanges de ces élastomères. De préférence lorsque l'autre élastomère diénique est présent, il est choisi dans le groupe constitué par les polybutadiènes, les polyisoprènes de synthèse, le caoutchouc naturel et les mélanges de ces élastomères.

La composition à base de néoprène comme élastomère majoritaire peut comprendre exclusivement, c'est-à-dire 100 pce, de néoprène.

Alternativement, la composition à base de néoprène comme élastomère majoritaire peut comprendre de 50 à moins de 100 pce, par exemple de 70 à moins de 100 pce, par exemple de 80 à moins de 100 pce de néoprène. Dans ce cas, la composition à base de néoprène comme élastomère majoritaire comprend de plus de 0 à 50 pce, par exemple de plus de 0 à 30 pce, par exemple de plus de 0 à 20 pce, par exemple de 0 à 15 pce d'un autre élastomère diénique (c'est à un d'un élastomère diénique différent du néoprène).

De préférence, la composition à base de néoprène comme élastomère majoritaire peut comprendre de 50 à moins de 100 pce, par exemple de 60 à moins de 100 pce, par exemple de 65 à 90 pce, par exemple de 65 à 80 pce de néoprène et respectivement de plus de 0 à 50 pce, par exemple de plus de 0 à 40 pce, par exemple de 10 à 35 pce, par exemple de 20 à 35 pce, de polyisoprène, avantageusement du caoutchouc naturel, du polyisoprène de synthèse ou leur mélange.

Alternativement, de préférence également, la composition à base de néoprène comme élastomère majoritaire peut également comprendre de 50 à moins 100 pce, par exemple de 70 à moins de 100 pce, par exemple de 75 à 95 pce, par exemple de 75 à 90 pce de néoprène et respectivement de plus de 0 à 50 pce, par exemple de plus de 0 à 30 pce, par exemple de 5 à 25 pce, par exemple de 10 à 25 pce de polybutadiène.

### Système de réticulation

Selon l'invention, le système de réticulation est exempt de peroxyde ou en comprend moins de 0,1 pce et comprenant un dérivé d'acrylate de formule (I)

**[X]p A** (I)

dans laquelle,
- [X]p correspond à la formule (II) 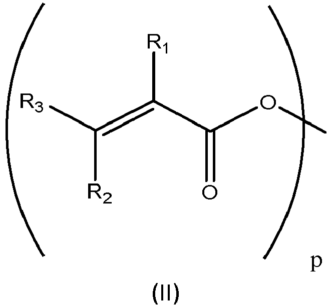 dans laquelle,
   R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
- A représente un atome appartenant au groupe constitué par les métaux alcalino-terreux ou les métaux de transition, un atome de carbone ou un groupement hydrocarboné en C₁-C₈, A comprenant p valences libres, p ayant une valeur allant de 2 à 4,
- étant entendu que les 2 à 4 radicaux X sont identiques ou différents.

Par groupe alkyle cyclique, on entend un groupe alkyle comprenant un ou plusieurs cycles.

Par groupe ou chaîne hydrocarboné(e) interrompu(e) par un ou plusieurs hétéroatomes, on entend un groupe ou chaîne comprenant un ou plusieurs hétéroatomes, chaque hétéroatome étant compris entre deux atomes de carbone dudit groupe ou de ladite chaîne, ou entre un atome de carbone dudit groupe ou de ladite chaîne et un autre hétéroatome dudit groupe ou de ladite chaîne ou entre deux autres hétéroatomes dudit groupe ou de ladite chaîne. Le ou les hétéroatomes peuvent être un atome d'azote, de soufre ou d'oxygène.

Quel que soit la nature du radical A, R₁, R₂ et R₃ peuvent représenter indépendamment les uns des autres un atome d'hydrogène, un groupement méthyle ou un groupement éthyle.

Avantageusement, R₁ peut représenter un groupement méthyle et R₂ et R₃ peuvent représenter chacun un atome d'hydrogène. Alternativement, R₁, R₂ et R₃ peuvent représenter chacun un atome d'hydrogène.

Le nombre de valence p dépend de la nature du radical A. Selon l'invention, p peut valoir 2, 3 ou 4. Par exemple, p peut valoir 2 ou 3, par exemple 2.

Selon l'invention, lorsque A représente un atome appartenant au groupe constitué par les métaux alcalino-terreux ou les métaux de transition, il peut s'agir par exemple d'un atome choisi dans le groupe constitué par Zn et Mg.

Lorsque A représente un groupement hydrocarboné en C₁-C₈, il peut s'agir par exemple d'un groupement hydrocarboné en C₁-C₇, de préférence en C₁-C₆, de préférence en C₁-C₅. Par exemple, le groupement hydrocarboné en C₁-C₈ est choisi dans le groupe constitué par les radicaux suivants :

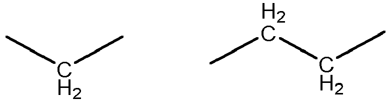

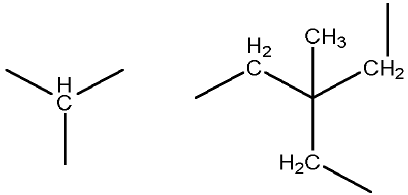

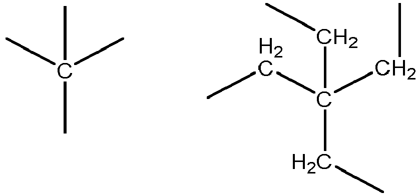

Ainsi, selon l'invention, le dérivé d'acrylate de formule (I) peut être choisi parmi le diméthacrylate de zinc (ZDMA), le diméthacrylate de magnésium (MgDMA), le diacrylate de zinc (ZMA), le triméthylopropane triméthylacrylate (TMPTMA), triméthylolproprane triacrylate (TMPTA), l'éthylèneglycol trimétacrylate (EGDMA), le polyéthylèneglycol dimétacrylate (PEGDMA) et un mélange de ces dérivés d'acrylate. De préférence, De préférence, le dérivé d'acrylate de formule (I) est le ZDMA, MgDMA, ou le mélange de ces dérivés d'acrylate.

A titre d'exemple, on trouve dans le commerce des dérivés de diacrylate tels que le diacrylate de zinc (ZDA) « DIMALINK 633 » de la société CRAY VALLEY, le diméthacrylate de zinc (ZDMA) « DIMALINK 634 » de la société CRAY VALLEY ou le triméthylolpropane triméthacrylate (TMPTMA) « SR351 » de la société SARTOMER.

Selon l'invention, la liaison entre X est A peut être une liaison ionique ou une liaison covalente. L'homme du métier comprend bien que lorsque A représente un atome appartenant au groupe constitué par les métaux alcalino-terreux ou les métaux de transition, notamment Zn ou Mg, la liaison entre X et A est une liaison ionique. Par ailleurs, lorsque « A » représente un atome de carbone ou un groupement hydrocarboné en C₁-C₈, l'homme du métier comprend bien que la liaison entre X et A est une liaison covalente.

Selon l'invention, le taux de dérivé d'acrylate dans la composition peut être compris dans un domaine allant de 1 à 25 pce, de préférence de 1 à 10 pce, de préférence de 1 à 9, de préférence de 1 à 7, de préférence de 2 à 5 pce.

Le système de réticulation développé par les Demanderesses permet d'améliorer significativement l'allongement rupture et la cohésion de composition à base de néoprène comme élastomère majoritaire.

Les Demanderesses ont par ailleurs découvert, de manière totalement inattendu, que les dérivés d'acrylate de formule (I) décrits dans la présente permettent de réticuler le néoprène en absence totale d'autres agents de réticulation, tels que les oxydes métalliques ou les peroxydes.

Le système de réticulation selon la présent invention présente ainsi l'avantage de réduire fortement, voir éliminer complètement, l'utilisation de peroxyde, ce qui est particulièrement intéressant du point de vue sécurité au grillage (« scorch » en anglais) et de sécurité d'utilisation dans la mesure où les peroxydes présentent des risque importants d'incendie et d'explosion.

Il est intéressant de noter que les dérivés d'acrylate, tel que de diméthacrylate de zinc, peuvent classiquement être utilisés en tant que co-agents des peroxydes pour la réticulation des élastomères diéniques. Or, jamais les dérivés d'acrylate n'ont été utilisés seuls ou avec une très faible quantité de peroxyde, en tant qu'agent de réticulation de compositions de caoutchouc, et encore moins pour la réticulation de compositions à base de néoprène comme élastomère majoritaire, le néoprène étant classiquement réticulé à l'aide d'oxydes de zinc et/ou de magnésium. Par ailleurs, de manière très surprenante, les Demanderesses ont mis en évidence que la diminution drastique de la quantité de peroxyde, voire sa suppression totale, en présence de dérivé d'acrylate permet de réticuler des compositions à base de néoprène comme élastomère majoritaire tout en améliorant significativement les propriétés limites et la cohésion de ces compositions.

Ainsi, selon l'invention, la composition est exempte de peroxyde ou en comprend moins de 0,1 pce, par exemple moins de 0,05 pce.

A titre de peroxyde, on peut citer les peroxydes organiques choisis parmi le groupe comprenant le peroxyde de dicumyle, le peroxyde de 1, 3-bis- (t-butyl-isopropyl)-benzène, le peroxyde de 2, 5-diméthyl-2, 5-bis- t-butyl- hexane et le 1,1-bis-(t-butyl) -3 ,3,5-triméthyl- cyclohexane et le 2-5 dimethyl-2,5 di(terbutylperoxy)hex 3-yne.

Il existe dans le commerce divers produits conditionnes, connus sous leurs marques de fabrique; on peut citer: le « Dicup » de la société Hercules Powder Co., le « Perkadox Y12 » de la Societe Noury van der Lande, le « Peroximon F40 » de la société Montecatini Edison S.p.A., le « Trigonox » de la Societe Noury van der Lande, le « Varox » de la société R.T.Vanderbilt Co., ou encore le « Luperko », de la société Wallace & Tiernan, Inc.

Selon l'invention, la composition peut être exempte d'oxyde de zinc ou en contenir moins de 4 pce. Par exemple, le taux d'oxyde de zinc dans la composition peut être inférieur à 3,5 pce, de préférence inférieur à 3, à 2, voire à 1 pce.

Selon l'invention, la composition peut être exempte d'oxyde de magnésium ou en contenir moins de 5 pce. Par exemple, le taux d'oxyde de magnésium dans la composition peut être inférieur à 4,5 pce, de préférence inférieur à 4, 3, 2, voire 1 pce.

Par ailleurs, la composition peut être également exempte de soufre en tant qu'agent de vulcanisation, ou en contenir moins de 0,3 pce et de préférence moins de 0,1 pce. Le soufre peut être du soufre moléculaire ou provenir d'un agent donneur de soufre, tel que les alkyl phénol disulfures (APDS).

En d'autres termes, selon l'invention la présence d'oxydes de zinc et/ou de magnésium, classiquement utilisés pour la réticulation du néoprène, est possible mais n'est pas obligatoire pour permettre de réticuler des compositions à base de néoprène comme élastomère majoritaire. Il en va de même pour la présence de soufre ou d'agent donneur de soufre classiquement utilisé pour la réticulation des élastomères diéniques tels que les polyisoprènes, polybutadiènes etc.

### Charge renforçante

La charge renforçante est connue pour ses capacités à renforcer une composition de caoutchouc utilisable pour la fabrication de pneumatiques.

Selon l'invention, la charge renforçante peut comprendre du noir de carbone, une charge organique autre que le noir de carbone, une charge inorganique ou le mélange d'au moins deux de ces charges. Préférentiellement, la charge renforçante peut comprendre majoritairement, voire exclusivement, du noir de carbone. La charge renforçante peut également comprendre majoritairement, voire exclusivement, une charge inorganique renforçante.

Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

Le noir de carbone présente une surface spécifique BET de préférence d'au moins 90 m2/g, de manière plus préférentielle d'au moins 100 m2/g. A ce titre conviennent les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0.1 à 0.3].

Comme exemples de charges organiques autres que des noirs de carbone, on peut citer les charges organiques de polyvinyle fonctionnalisé telles que décrites dans les demandes WO 2006/069792, WO 2006/069793, WO 2008/003434 et WO 2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non noire" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface. En d'autres termes, sans agent de couplage, la charge inorganique ne permet pas de renforcer, ou pas suffisamment, la composition et n'est par conséquent pas comprise dans la définition de « charge inorganique renforçante ».

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, en ce qui concerne la silice, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po* : 0.05 à 0.17). La surface spécifique CTAB est la surface externe déterminée selon la norme française NF T 45-007 de novembre 1987 (méthode B).

Conviennent également comme charges inorganiques renforçantes les charges minérales du type alumineuse, en particulier de l'alumine (Al₂O₃) ou des (oxyde)hydroxydes d'aluminium, ou encore des oxydes de titane renforçants, par exemple décrits dans US 6,610,261 et US 6,747,087.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-dessus.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants : WO 02/083782, WO 02/30939, WO 02/31041, WO 2007/061550, WO 2006/125532, WO 2006/125533, WO 2006/125534, US6 849 754, WO 99/09036, WO 2006/023815, WO 2007/098080, WO 2010/072685 et WO 2008/055986.

La teneur en agent de couplage est avantageusement inférieure à 12 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris dans un domaine allant de 0,5 à 9 pce, plus préférentiellement compris dans un domaine allant de 3 à 9 pce. Ce taux est aisément ajusté par l'homme du métier selon le taux de charge inorganique utilisé dans la composition.

Selon l'invention, le taux de charge renforçante peut être compris dans un domaine allant de 20 à 100 pce, de préférence de 20 à 80 pce, de préférence de 20 à 60 pce.

### Plastifiant liquide

La composition peut en outre comprendre un ou plusieurs (c'est-à-dire au moins un) plastifiants liquides.

Un plastifiant liquide est un agent plastifiant liquide à 23°C dont la fonction est de ramollir la matrice en diluant l'élastomère et la charge renforçante ; sa Tg est préférentiellement inférieure à -20°C, plus préférentiellement inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE, les huiles MES (*Medium Extracted Solvates*), les huiles TDAE (*Treated Distillate Aromatic Extracts*), les huiles RAE (*Residual Aromatic Extract oils*), les huiles TRAE (*Treated Residual Aromatic Extract*) et les huiles SRAE (*Safety Residual Aromatic Extract oils*), les huiles minérales, les plastifiant liquides dérivés des terpènes tel que le produit « Dimarone » de Yasuhara, les huiles végétales, les plastifiants éthers tels que les polyéthylène glycols ou les polypropylène glycols, les plastifiants esters tels que les triesters d'acide carboxylique, d'acide phosphorique, d'acide sulfonique et les mélanges de ces triesters, les plastifiants phosphates, les plastifiants sulfonates et les mélanges de ces composés.

Conviennent également les polymères liquides issus de la polymérisation d'oléfines ou de diènes, comme les polybutènes, les polydiènes, en particulier les polybutadiènes, les polyisoprènes (connus également sous l'appellation « LIR ») ou les copolymères de butadiène et d'isoprène, ou encore les copolymères de butadiène ou d'isoprène et de styrène ou les mélanges de ces polymères liquides. La masse molaire moyenne en nombre de tels polymères liquides est comprise préférentiellement dans un domaine allant de 500 g/mol à 50000 g/mol, préférentiellement de 1000 g/mol à 10000 g/mol. A titre d'exemple peuvent être cités les produits « RICON » de SARTOMER.

Avantageusement, le plastifiant liquide est choisi dans le groupe constitué par les huiles MES, les huiles TDAE et les huiles végétales. A titre d'exemple d'huile végétale, on peut citer par exemple l'huile de tournesol oléique.

L'utilisation de 5 à 40 pce de plastifiant liquide dans la composition à base de néoprène comme élastomère majoritaire permet d'améliorer davantage les propriétés limites du mélange, en particulier l'allongement rupture.

Ainsi, selon une variante préférentielle, le taux de plastifiant liquide dans la composition peut être compris dans un domaine allant de 5 à 40 pce, de préférence de 10 à 30 pce.

Préférentiellement également, la composition ne comprend pas de plastifiant liquide, ou en comprend moins de 5 pce, de préférence moins de 2 pce.

### Additifs divers

La composition peut également comporter tout ou partie des additifs usuels habituellement utilisés dans les compositions d'élastomères destinées à constituer des bandes de roulement, comme par exemple des pigments, des agents de protection tels que cires anti-ozone, anti-ozonants chimiques, anti-oxydants, des agents antifatigue, bien connus de l'homme du métier.

### Pneumatiques

L'invention concerne particulièrement des pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres

Il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée couche étanche intérieure ou gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

La composition définie dans la présente description est particulièrement bien adaptée aux couches internes et aux flancs externes des pneumatiques.

Aussi, le pneumatique selon la présente invention peut être un pneumatique dans lequel la composition du pneumatique selon l'invention est présente dans une couche interne ou dans le flanc externe dudit pneumatique. En d'autres termes, le pneumatique selon la présente invention peut être un pneumatique pourvu d'une couche interne et d'un flan externe, ladite couche interne et/ou ledit flan externe comprenant une composition à base de néoprène comme élastomère majoritaire, d'une charge renforçante et d'un système de réticulation étant exempt de peroxyde ou en contenant moins de 0,1 parties en poids pour cent parties en poids d'élastomère, pce, le système de réticulation comprenant un dérivé d'acrylate de formule (I)

**[X]p A** (I)

dans laquelle,
- [X]p correspond à la formule (II) 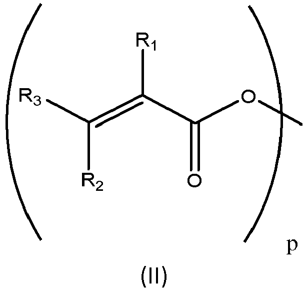 dans laquelle,
   R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R2 et R₃ pouvant former ensemble un cycle non aromatique,
- A représente un atome appartenant au groupe constitué par les métaux alcalino-terreux ou les métaux de transition, un atome de carbone ou un groupement hydrocarboné en C₁-C₈, A comprenant p valences libres, p ayant une valeur allant de 2 à 4,
étant entendu que les 2 à 4 radicaux X sont identiques ou différents.

Selon l'invention, la couche interne peut être choisie dans le groupe constitué par les nappes carcasse, la sous-couche de bande de roulement, la ceinture de pneumatique ou une combinaison de ces couches internes. De préférence, la couche interne est choisie parmi les nappes carcasses, la ceinture de pneumatique et une combinaison de ces couches internes.

### Exemples de réalisation de l'invention

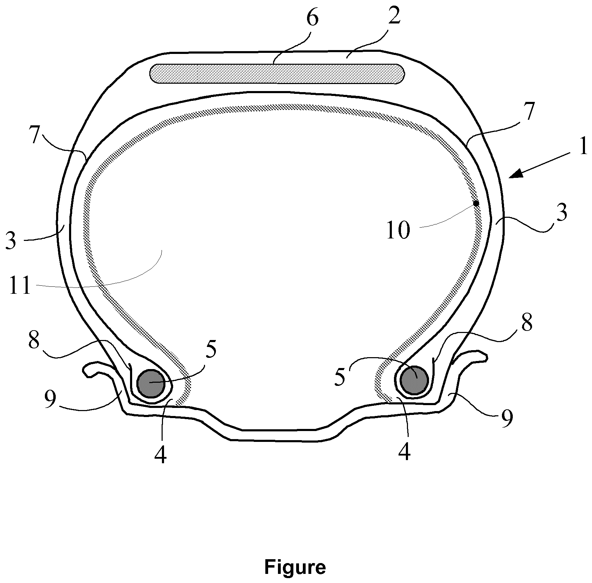

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs externes 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi intérieure du bandage pneumatique 1 comporte une couche 10 étanche à l'air, par exemple d'épaisseur égale à environ 0,9 mm, du côté de la cavité interne 11 du bandage pneumatique 1.

La couche interne de pneumatique selon l'invention, peut être par exemple dans le pneumatique décrit ci-dessus, le sommet 2, la ceinture de pneumatique 6, ou l'armature de carcasse 7 (ou nappe carcasse). Il pourrait également s'agir d'une couche placée entre le sommet et la bande de roulement, souvent appelée sous-couche.

Bien entendu, lorsque la ou les couches internes du pneumatique selon l'invention comprennent des renforts métalliques et/ou textiles (nappe carcasse et/ou ceinture), la composition de caoutchouc telle que définie pour les besoins du pneumatique selon l'invention, pourra être celle qui enrobe les fils métalliques et/ou textiles, appelée gomme d'enrobage ou composition de calandrage. Plus précisément, une ceinture de pneumatique est généralement constituée d'au moins deux nappes de ceinture superposées, dites parfois nappes "de travail" ou nappes "croisées", dont les éléments de renforcement ou "renforts" sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneumatique considéré. Chacune de ces deux nappes croisées est constituée d'une matrice de caoutchouc dite parfois "gomme de calandrage" enrobant les renforts. Dans la ceinture, les nappes croisées peuvent être complétées par diverses autres nappes comportant des renforts ; on citera en particulier des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées. Pour le renforcement des ceintures ci-dessus, en particulier de leurs nappes croisées, nappes de protection ou nappes de frettage, on utilise généralement des renforts sous forme de câbles d'acier ("steel cords") ou des câblés textiles ("textile cords") constitués de fils fins assemblés entre eux par câblage ou retordage, il en va de même pour les nappes carcasses dont les renforts sont généralement orientés radialement.

Le pneumatique pourvu de son flanc externe et/ou de sa couche interne tel que décrit ci-dessus est de préférence réalisé avant vulcanisation (ou cuisson). La vulcanisation est ensuite effectuée classiquement. Les élastomères blocs supportent bien les contraintes liées à l'étape de vulcanisation.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche ("skim") d'épaisseur adaptée, avant de recouvrir cette dernière avec le reste de la structure du bandage pneumatique et notamment avec les couches internes, selon des techniques de fabrication bien connues de l'homme du métier.

### Préparation des compositions de caoutchouc

Les compositions utilisées dans les pneumatiques de l'invention, peuvent être fabriquées dans des mélangeurs appropriés, en utilisant deux phases de préparation successives selon une procédure générale bien connue de l'homme du métier: une première phase de travail ou malaxage thermo-mécanique (parfois qualifiée de phase "non-productive") à haute température, jusqu'à une température maximale comprise entre 80°C et 140°C, de préférence entre 100°C et 125°C, suivie d'une seconde phase de travail mécanique (parfois qualifiée de phase "productive") à plus basse température, typiquement inférieure à 100°C, par exemple entre 60°C et 100°C, phase de finition au cours de laquelle est incorporé l'agent de réticulation chimique, en particulier le système de réticulation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires et autres additifs divers, à l'exception du système de réticulation. La durée totale du malaxage, dans cette phase non-productive, est de préférence comprise entre 2 et 10 min. Après refroidissement du mélange ainsi obtenu au cours de la première phase non-productive, on incorpore alors le système de réticulation à basse température, généralement dans un mélangeur externe tel qu'un mélangeur à cylindres; le tout est alors mélangé (phase productive) pendant quelques minutes, par exemple entre 5 et 15 min.

La première étape de malaxage est généralement réalisée en incorporant la charge renforçante à l'élastomère en une ou plusieurs fois en malaxant thermomécaniquement. Dans le cas où la charge renforçante, en particulier le noir de carbone, est déjà incorporée en totalité ou en partie à l'élastomère sous la forme d'un masterbatch comme cela est décrit par exemple dans les demandes WO 97/36724 ou WO 99/16600, c'est le masterbatch qui est directement malaxé et le cas échéant on incorpore les autres élastomères ou charges renforçantes présents dans la composition qui ne sont pas sous la forme de masterbatch, ainsi que les additifs autres que le système de réticulation.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme flan externe ou couche interne telle qu'une nappe carcasse ou une ceinture de pneumatique.

D'autres avantages pourront encore apparaître à l'homme du métier à la lecture des exemples ci-dessous, illustrés par les figures annexées, donnés à titre illustratif et non limitatif.

### EXEMPLES

### I. Mesures et tests utilisés

### I.1 Propriété dynamiques après cuisson (essai de traction)

Ces essais de traction permettent de déterminer les contraintes d'élasticité et les propriétés à la rupture. Sauf indication différente, ils sont effectués conformément à la norme française NF T 46-002 de septembre 1988. Un traitement des enregistrements de traction permet également de tracer la courbe de module en fonction de l'allongement. Le module utilisé ici étant le module sécant nominal (ou apparent) mesuré en première élongation, calculé en se ramenant à la section initiale de l'éprouvette.

On mesure en première élongation les modules sécants nominaux (ou contraintes apparentes, en MPa) à 100% et 300% d'allongement notés respectivement M100 et M300 à une vitesse d'extrusion de 500 mm/min. Le rapport M300/M100 correspond à l'indice de renforcement.

On mesure également les contraintes à la rupture (en MPa) et les allongements à la rupture (AR en %), à 23°C ± 2°C, selon la norme NF T 46-002.

Les essais d'allongement rupture (AR%), de module d'allongement, de contrainte rupture et de cohésion (énergie rupture) sont basées sur la norme NF ISO 37 de Décembre 2005 sur une éprouvette haltère de type H2. L'allongement rupture ainsi mesuré à une vitesse de traction de 500 mm/min est exprimé en % d'allongement. L'Energie rupture correspond au produit de l'allongement rupture et de la contrainte rupture et est exprimée en MJ.

Toutes ces mesures de traction sont effectuées dans les conditions normales de température (23±2°C) et d'hygrométrie (50±5% d'humidité relative), selon la norme française NF T 40-101 (décembre 1979).

### I.2 Couple

Le couple dN.mm a été mesure à l'aide d'un rhéomètre RPA après une cuisson de 40 minutes à 150°C.

### II. Préparation des compositions

Les compositions A à M, dont la formulation en pce figure dans les tableaux 1 à 4 ci-dessous, ont été préparées de la manière suivante.

On introduit dans un mélangeur interne (taux de remplissage final : environ 70% en volume), dont la température initiale de cuve est d'environ 50°C, successivement les élastomères diéniques, les charges renforçantes, ainsi que les éventuels divers autres ingrédients a l'exception du système de vulcanisation. On conduit alors un travail thermomécanique (phase non productive) en une étape, qui dure au total environ 3 à 4 min, jusqu'à atteindre une température maximale de « tombée » de 120°C. On récupère le mélange ainsi obtenu, on le refroidit puis on incorpore le système de vulcanisation sur un mélangeur (homo-finisseur) à 70°C, en mélangeant le tout (phase productive) pendant un temps approprié (par exemple une dizaine de minutes).

Les compositions ainsi obtenues sont ensuite calandrées sous la forme de plaques (épaisseur 2 à 3 mm) ou de feuilles fines de caoutchouc pour la mesure de leurs propriétés physiques ou mécaniques.

Les produits suivants ont été utilisés :

| | | |
|---|---|---|
| - | Néoprène | : Néoprène « WRT » de la société Dupont |
| - | N326 | : Noir de carbone de grade N326 selon la norme ASTM D-1765 |
| - | TDAE | : Huile TDAE « Viva Tec500 » de la société Klaus Dahleke |
| - | MES | : Huile Mes « Catenex SNR » de la société Shell |
| - | ZDMA | : diméthacrylate de zinc « Dimalink » de la société Cray Valley |
| - | MgDMA | : diméthacrylate de magnésium Mg DMA de Nanjing Hand in Hand |
| - | Dicup | : dicumyle peroxyde « Dicup » de la société Hercules Powder Co |
| - | ZnO | : Oxyde de zinc de grade industriel de la société Umicore |
| - | MgO | : Oxyde de magnésium de grade industriel de la société Umicore |
| - | CBS | : N-cyclohexyl-2-benzothiazol-sulfénamide « Santocure CBS » de la société Flexsys |

### III. Essais et Résultats

### III. 1 Effet du taux de dérivé d'acrylate en présence et en absence de peroxyde

On a utilisé une composition témoin A qui est une composition classiquement utilisée pour vulcaniser du néoprène. Cette composition A comprend des oxydes de zinc et de magnésium mais ne comprend pas de dérivé d'acrylate.

Des compositions B et D, conformes à l'invention en ce qu'elles comprennent un système de réticulation comprenant un dérivé d'acrylate de formule (I) et exempt de peroxyde, ont également été comparées à des compositions témoin C et E qui comprennent du peroxyde à des teneurs supérieures à 0,1 pce en plus du dérivé d'acrylate.

**Tableau 1**

| | **A témoin** | **B** | **C témoin** | **D** | **E témoin** |
|---|---|---|---|---|---|
| Néoprène | 100 | 100 | 100 | 100 | 100 |
| N326 | 40 | 40 | 40 | 40 | 40 |
| ZnO | 5 | | | | |
| MgO | 4 | | | | |
| CBS | 1 | | | | |
| ZDMA | | 5 | 5 | 10 | 10 |
| Dicup | | | 0,5 | | 1 |
| | | | | | |
| AR% | 637 | 555 | 490 | 502 | 346 |
| Energie Rupture (MJ) | 127 | 179 | 150 | 144 | 73 |

En comparant les résultats obtenus à partir des compositions B et C, et D et E respectivement, on a constaté que l'utilisation de dérivé d'acrylate de formule (I) seul, tel que le ZDMA, pour réticuler du néoprène permet d'améliorer à la fois les propriétés d'allongement rupture et de cohésion en comparaison avec des systèmes comprenant à la fois du peroxyde et le dérivé d'acrylate de formule (I). Les compositions B et D, conformes à l'invention, permettent également d'améliorer la cohésion des mélanges, tout en conservant des propriétés d'allongement rupture acceptables par rapport aux compositions utilisant le système de réticulation classiquement utilisés (à base d'oxydes de zinc et de magnésium) pour la réticulation du néoprène. Les résultats sont particulièrement efficaces avec des taux de l'ordre de 5 pce de ZDMA.

### III. 2 Effet du taux de MgO

Des compositions F, G et H, conformes à l'invention en ce qu'elles comprennent un système de réticulation comprenant un dérivé d'acrylate de formule (I) et exempt de peroxyde, ont également été comparées à la composition A précédemment décrite en utilisant différents taux d'oxyde de magnésium.

**Tableau 2**

| | **A témoin** | **F** | **G** | **H** |
|---|---|---|---|---|
| Néoprène | 100 | 100 | 100 | 100 |
| N326 | 40 | 40 | 40 | 40 |
| ZnO | 5 | 5 | 5 | 5 |
| MgO | 4 | 2 | 1 | 0,5 |
| CBS | 1 | | | |
| ZDMA | | 5 | 5 | 5 |
| | | | | |
| M300/M100 | 2,31 | 2,34 | 2,68 | 2,98 |

Ces résultats montrent que la présence d'un faible taux de magnésium dans les compostions conformes à l'invention permet d'améliorer l'indice de renforcement des mélanges. Cette amélioration augmente d'autant plus que la quantité de MgO est faible.

### III. 3 Réticulation du néoprène

Des compositions L et M, conformes à l'invention en ce qu'elles comprennent un système de réticulation comprenant un dérivé d'acrylate de formule (I) et exempt de peroxyde, ont été réalisées afin de comparer différents dérivés d'acrylate de formule (I).

**Tableau 3**

| | **L** | **M** |
|---|---|---|
| Néoprène | 100 | 100 |
| N326 | 40 | 40 |
| ZnO | 9 | 9 |
| ZDMA | 5 | |
| MgDMA | | 5 |
| | | |
| C Max (dN.m) | 7,3 | 8,2 |

Ces résultats montrent que différents dérivés d'acrylate de formule (I) sont efficaces pour réticuler du néoprène en absence de peroxyde.

### IV. Effet du taux de soufre

Une composition N conforme à l'invention en ce qu'elle comprend moins de 0,3 pce de soufre, et des compositions O, P et Q non-conformes à l'invention en ce qu'elles comprennent 0,3 pce ou plus de soufre, ont également été comparées à la composition D précédemment décrite en utilisant différents taux de soufre.

**Tableau 4**

| | **D** | **N** | **O témoin** | **P témoin** | **Q témoin** |
|---|---|---|---|---|---|
| Néoprène | 100 | 100 | 100 | 100 | 100 |
| N326 | 40 | 40 | 40 | 40 | 40 |
| ZDMA | 10 | 10 | 10 | 10 | 10 |
| Soufre | 0 | 0,2 | 0,5 | 0,8 | 1,0 |
| | | | | | |
| AR% | 502 | 500 | 480 | 480 | 490 |
| Energie Rupture (MJ) | 144 | 139 | 100 | 80 | 65 |

Ces résultats montrent que la présence de plus de 0,3 pce de soufre, en particulier de plus de 0,5 pce de soufre, pénalise la cohésion du mélange.

## Revendications

1. Pneumatique comprenant au moins une composition à base de néoprène comme élastomère majoritaire, d'une charge renforçante et d'un système de réticulation étant exempt de peroxyde ou en contenant moins de 0,1 parties en poids pour cent parties en poids d'élastomère, pce, le système de réticulation comprenant un dérivé d'acrylate de formule (I)
[X]ₚ A (I)
dans laquelle,
- [X]p correspond à la formule (II) 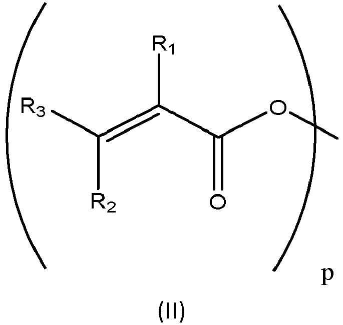 dans laquelle,
R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
- A représente un atome appartenant au groupe constitué par les métaux alcalino-terreux ou les métaux de transition, un atome de carbone ou un groupement hydrocarboné en C₁-C₈,
A comprenant p valences libres, p ayant une valeur allant de 2 à 4,
étant entendu que lorsque p vaut de 2 à 4, les 2 à 4 radicaux X sont identiques ou différents,
ladite composition étant exempte de soufre en tant qu'agent de vulcanisation, ou en contient moins de 0,3 pce.

2. Pneumatique selon la revendication 1, dans lequel le taux de néoprène dans ladite composition est compris dans un domaine allant de 70 à moins de 100 pce, de préférence de 80 à moins de 100 pce.

3. Pneumatique selon la revendication 1 ou 2, dans lequel ladite composition comprend en outre un élastomère diénique différent du néoprène, de préférence choisi dans le groupe constitué par les polybutadiènes, les polyisoprènes de synthèse, le caoutchouc naturel, les copolymères de butadiène, les copolymères d'isoprène et les mélanges de ces élastomères.

4. Pneumatique selon l'une quelconque des revendications 1 à 3, dans lequel le néoprène comprend de 70% à moins de 100%, de préférence de 80% à moins de 100%, en poids, de monomères chloroprène.

5. Pneumatique selon l'une quelconque des revendications 1 à 4, dans lequel le néoprène est fabriqué à partir de monomères chloroprène et de monomères différents du chloroprène choisis dans le groupe constitué par le 2,3-dichloro-1,3-butadiene, le butadiène, l'isoprène, le styrène le soufre et des mercaptans.

6. Pneumatique selon l'une quelconque des revendications 1 à 3, dans lequel le néoprène comprend 100% en poids de monomères chloroprène.

7. Pneumatique selon l'une quelconque des revendications 1 à 6, dans lequel la charge renforçante comprend un noir de carbone et/ou une charge renforçante inorganique.

8. Pneumatique selon la revendication 7, dans lequel la charge renforçante comprend majoritairement, de préférence exclusivement, un noir de carbone.

9. Pneumatique selon l'une quelconque des revendications 1 à 8, dans lequel le dérivé d'acrylate est choisi parmi le diméthacrylate de zinc, diméthacrylate de magnésium, le diacrylate de zinc, le triméthylopropane triméthylacrylate, trimethylolproprane triacrylate, l'éthylèneglycol trimétacrylate, le polyéthylèneglycol dimétacrylate et un mélange de ces dérivés d'acrylate.

10. Pneumatique selon l'une quelconque des revendications 1 à 9, dans lequel le taux de dérivé d'acrylate dans ladite composition est compris dans un domaine allant de 1 à 25 pce, de préférence de 1 à 10 pce.

11. Pneumatique selon l'une quelconque des revendications 1 à 10, dans lequel ladite composition comprend en outre au moins un plastifiant liquide.

12. Pneumatique selon la revendication 11, dans lequel le plastifiant liquide est choisi dans le groupe constitué par les huiles MES, les huiles TDAE et les huiles végétales.

13. Pneumatique selon la revendication 11 ou 12, dans lequel le taux de plastifiant liquide dans ladite composition est compris dans un domaine allant de 5 à 40 pce, de préférence de 10 à 30 pce.

14. Pneumatique selon l'une quelconque des revendications 1 à 13, dans lequel ladite composition est présente dans une couche interne ou dans le flanc externe dudit pneumatique.

15. Composition de caoutchouc à base de néoprène comme élastomère majoritaire, d'une charge renforçante et d'un système de réticulation exempt de peroxyde, ou en contenant moins de 0,1 parties en poids pour cent parties en poids d'élastomère, pce, et (i) exempt d'oxyde de zinc ou en contenant moins de 4 pce, et/ou (ii) exempt d'oxyde de magnésium ou en contenant moins de 5 pce, le système de réticulation comprenant un dérivé d'acrylate de formule (I)
**[X]ₚ A** (I)
dans laquelle,
- [X]p correspond à la formule (II) 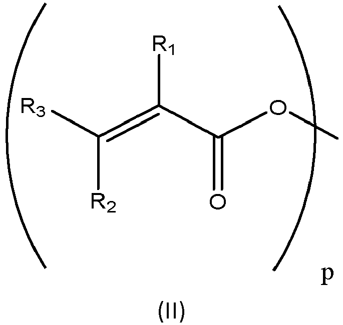 dans laquelle,
R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
- A représente un atome appartenant au groupe constitué par les métaux alcalino-terreux ou les métaux de transition, un atome de carbone ou un groupement hydrocarboné en C₁-C₈,
A comprenant p valences libres, p ayant une valeur allant de 2 à 4,
étant entendu que les 2 à 4 radicaux X sont identiques ou différents,
ladite composition étant exempte de soufre en tant qu'agent de vulcanisation, ou en contient moins de 0,3 pce.

## Patentansprüche

1. Reifen, umfassend mindestens eine Zusammensetzung auf Basis von Neopren als Hauptelastomer, einem verstärkenden Füllstoff und einem Vernetzungssystem, das frei von Peroxid ist oder weniger als 0,1 Gewichtsteile davon pro hundert Gewichtsteile Elastomer, phe, umfasst, wobei das Vernetzungssystem ein Acrylatderivat der Formel (I)
**[X]ₚ A** (I)
umfasst, in der
- [X]p der Formel (II) 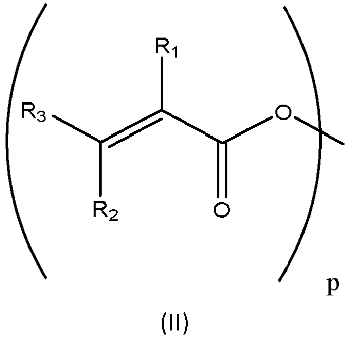 entspricht, in der
R₁, R₂ und R₃ unabhängig für ein Wasserstoffatom oder eine C₁-C₈-Kohlenwasserstoffgruppe, die aus der Gruppe bestehend aus linearen, verzweigten oder cyclischen Alkylgruppen, Alkylarylgruppen, Arylgruppen und Aralkylgruppen ausgewählt ist und gegebenenfalls durch ein oder mehrere Heteroatome unterbrochen ist, stehen, wobei R₂ und R₃ zusammen einen nichtaromatischen Ring bilden können,
- A für ein Atom, das zur Gruppe bestehend aus Erdalkalimetallen oder Übergangsmetallen gehört, ein Kohlenstoffatom oder eine C₁-C₈-Kohlenwasserstoffgruppe steht,
wobei A p freie Valenzen umfasst, wobei p einen Wert im Bereich von 2 bis 4 hat,
wobei es sich versteht, dass dann, wenn p einen Wert von 2 bis 4 hat, die 2 bis 4 Reste X gleich oder verschieden sind,
wobei die Zusammensetzung frei von Schwefel als Vulkanisationsmittel ist oder weniger als 0,3 phe davon enthält.

2. Reifen nach Anspruch 1, wobei der Neoprengehalt in der Zusammensetzung in einem Bereich von 70 bis weniger als 100 phe, vorzugsweise von 80 bis weniger als 100 phe, liegt.

3. Reifen nach Anspruch 1 oder 2, wobei die Zusammensetzung außerdem ein von Neopren verschiedenes Dienelastomer umfasst, das vorzugsweise aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

4. Reifen nach einem der Ansprüche 1 bis 3, wobei das Neopren 70 bis weniger als 100 Gew.-%, vorzugsweise 80 bis weniger als 100 Gew.-%, Chloropren-Monomere umfasst.

5. Reifen nach einem der Ansprüche 1 bis 4, wobei das Neopren aus Chloropren-Monomeren und von Chloropren verschiedenen Monomeren aus der Gruppe bestehend aus 2,3-Dichlor-1,3-butadien, Butadien, Isopren, Styrol, Schwefel und Mercaptanen hergestellt ist.

6. Reifen nach einem der Ansprüche 1 bis 3, wobei das Neopren 100 Gew.-% Chloropren-Monomere umfasst.

7. Reifen nach einem der Ansprüche 1 bis 6, wobei der verstärkende Füllstoff einen Ruß und/oder einen verstärkenden anorganischen Füllstoff umfasst.

8. Reifen nach Anspruch 7, wobei der verstärkende Füllstoff hauptsächlich, vorzugsweise ausschließlich, einen Ruß umfasst.

9. Reifen nach einem der Ansprüche 1 bis 8, wobei das Acrylatderivat aus Zinkdimethylacrylat, Magnesiumdimethylacrylat, Zinkdiacrylat, Trimethylolpropantrimethylacrylat, Trimethylolpropantriacrylat, Ethylenglykoltrimethacrylat, Polyethylenglykoldimethacrylat und einer Mischung dieser Acrylatderivate ausgewählt ist.

10. Reifen nach einem der Ansprüche 1 bis 9, wobei der Gehalt an Acrylatderivat in der Zusammensetzung in einem Bereich von 1 bis 25 phe, vorzugsweise 1 bis 10 phe, liegt.

11. Reifen nach einem der Ansprüche 1 bis 10, wobei die Zusammensetzung außerdem mindestens einen flüssigen Weichmacher umfasst.

12. Reifen nach Anspruch 11, wobei der flüssige Weichmacher aus der Gruppe bestehend aus MES-Ölen, TDAE-Ölen und Pflanzenölen ausgewählt ist.

13. Reifen nach Anspruch 11 oder 12, wobei der Gehalt an flüssigem Weichmacher in der Zusammensetzung in einem Bereich von 5 bis 40 phe, vorzugsweise von 10 bis 30 phe, liegt.

14. Reifen nach einem der Ansprüche 1 bis 13, wobei die Zusammensetzung in einer inneren Schicht oder der äußeren Seitenwand des Reifens vorliegt.

15. Kautschukzusammensetzung auf Basis von Neopren als Hauptelastomer, einem verstärkenden Füllstoff und einem Vernetzungssystem, das frei von Peroxid ist oder weniger als 0,1 Gewichtsteile davon pro hundert Gewichtsteile Elastomer, phe, umfasst und (i) frei von Zinkoxid ist oder weniger als 4 phe davon enthält und/oder (ii) frei von Magnesiumoxid ist oder weniger als 5 phe davon enthält, wobei das Vernetzungssystem ein Acrylatderivat der Formel (I)
**[X]ₚ A** (I)
umfasst, in der
- [X]p der Formel (II) 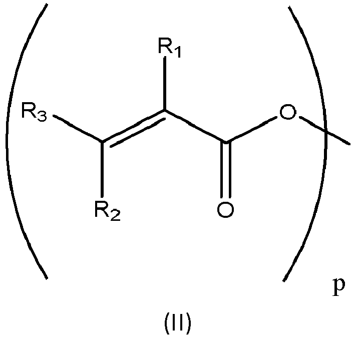 entspricht, in der
R₁, R₂ und R₃ unabhängig für ein Wasserstoffatom oder eine C₁-C₈-Kohlenwasserstoffgruppe, die aus der Gruppe bestehend aus linearen, verzweigten oder cyclischen Alkylgruppen, Alkylarylgruppen, Arylgruppen und Aralkylgruppen ausgewählt ist und gegebenenfalls durch ein oder mehrere Heteroatome unterbrochen ist, stehen, wobei R₂ und R₃ zusammen einen nichtaromatischen Ring bilden können,
- A für ein Atom, das zur Gruppe bestehend aus Erdalkalimetallen oder Übergangsmetallen gehört, ein Kohlenstoffatom oder eine C₁-C₈-Kohlenwasserstoffgruppe steht,
wobei A p freie Valenzen umfasst, wobei p einen Wert im Bereich von 2 bis 4 hat,
wobei es sich versteht, dass die 2 bis 4 Reste X gleich oder verschieden sind,
wobei die Zusammensetzung frei von Schwefel als Vulkanisationsmittel ist oder weniger als 0,3 phe davon enthält.

## Claims

1. Tyre comprising at least one composition based on neoprene as predominant elastomer, on a reinforcing filler and on a crosslinking system which is devoid of peroxide or which contains less than 0.1 part by weight thereof per hundred parts by weight of elastomer, phr, the crosslinking system comprising an acrylate derivative of formula (I):
**[X]ₚ A** (I)
wherein:
- [X]p corresponds to the formula (II): 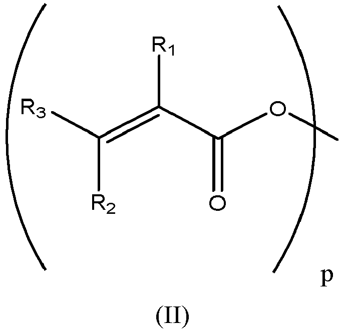 wherein:
R₁, R₂ and R₃ independently represent a hydrogen atom or a C₁-C₈ hydrocarbon group selected from the group consisting of linear, branched or cyclic alkyl groups, alkylaryl groups, aryl groups and aralkyls, and which are optionally interrupted by one or more heteroatoms, it being possible for R₂ and R₃ together to form a nonaromatic ring,
- A represents an atom belonging to the group consisting of alkaline earth metals and transition metals, a carbon atom or a C₁-C₈ hydrocarbon group, A comprising p free valencies, p having a value ranging from 2 to 4,
it being understood that, when p has a value from 2 to 4, the 2 to 4 X radicals are identical or different,
the said composition being devoid of sulfur as vulcanization agent or contains less than 0.3 phr thereof.

2. Tyre according to Claim 1, wherein the content of neoprene in the said composition is within a range extending from 70 to less than 100 phr, preferably from 80 to less than 100 phr.

3. Tyre according to Claim 1 or 2, wherein the said composition additionally comprises a diene elastomer other than neoprene, preferably selected from the group consisting of polybutadienes, synthetic polyisoprenes, natural rubber, butadiene copolymers, isoprene copolymers and the mixtures of these elastomers.

4. Tyre according to any one of Claims 1 to 3, wherein the neoprene comprises from 70% to less than 100%, preferably from 80% to less than 100%, by weight of chloroprene monomers.

5. Tyre according to any one of Claims 1 to 4, wherein the neoprene is manufactured from chloroprene monomers and from monomers other than chloroprene which are selected from the group consisting of 2,3-dichloro-1,3-butadiene, butadiene, isoprene, styrene, sulfur and mercaptans.

6. Tyre according to any one of Claims 1 to 3, wherein the neoprene comprises 100% by weight of chloroprene monomers.

7. Tyre according to any one of Claims 1 to 6, wherein the reinforcing filler comprises a carbon black and/or a reinforcing inorganic filler.

8. Tyre according to Claim 7, wherein the reinforcing filler predominantly, preferably exclusively, comprises a carbon black.

9. Tyre according to any one of Claims 1 to 8, wherein the acrylate derivative is chosen from zinc dimethacrylate, magnesium dimethacrylate, zinc diacrylate, trimethylolpropane trimethylacrylate, trimethylolpropane triacrylate, ethylene glycol dimethacrylate, polyethylene glycol dimethacrylate and a mixture of these acrylate derivatives.

10. Tyre according to any one of Claims 1 to 9, wherein the content of acrylate derivative in the said composition is within a range extending from 1 to 25 phr, preferably from 1 to 10 phr.

11. Tyre according to any one of Claims 1 to 10, wherein the said composition additionally comprises at least one liquid plasticizer.

12. Tyre according to Claim 11, wherein the liquid plasticizer is selected from the group consisting of MES oils, TDAE oils and vegetable oils.

13. Tyre according to Claim 11 or 12, wherein the content of liquid plasticizer in the said composition is within a range extending from 5 to 40 phr, preferably from 10 to 30 phr.

14. Tyre according to any one of Claims 1 to 13, wherein the said composition is present in an internal layer or in the external sidewall of the said tyre.

15. Rubber composition based on neoprene as predominant elastomer, on a reinforcing filler and on a crosslinking system which is devoid of peroxide or which contains less than 0.1 part by weight thereof per hundred parts by weight of elastomer, phr, and (i) which is devoid of zinc oxide or which contains less than 4 phr thereof and/or (ii) which is devoid of magnesium oxide or which contains less than 5 phr thereof, the crosslinking system comprising an acrylate derivative of formula (I):
**[X]ₚ A** (I)
wherein:
- [X]p corresponds to the formula (II): 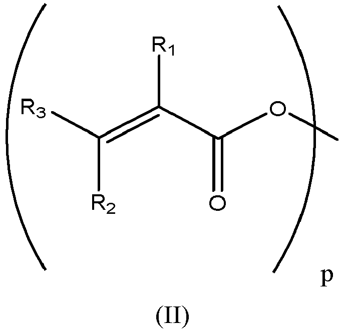 wherein:
R₁, R₂ and R₃ independently represent a hydrogen atom or a C₁-C₈ hydrocarbon group selected from the group consisting of linear, branched or cyclic alkyl groups, alkylaryl groups, aryl groups and aralkyls, and which are optionally interrupted by one or more heteroatoms, it being possible for R₂ and R₃ together to form a nonaromatic ring,
- A represents an atom belonging to the group consisting of alkaline earth metals and transition metals, a carbon atom or a C₁-C₈ hydrocarbon group, A comprising p free valencies, p having a value ranging from 2 to 4,
it being understood that the 2 to 4 X radicals are identical or different,
the said composition being devoid of sulfur as vulcanization agent or contains less than 0.3 phr thereof.
